# EUROPÄISCHE PATENTSCHRIFT

(11) **EP 1 716 687 B1**
(45) Veröffentlichungstag und Bekanntmachung des Hinweises auf die Patenterteilung: **15.07.2015**
(21) Anmeldenummer: 04764287.1
(22) Anmeldetag: 19.08.2004
(51) Int. Cl.: H04L 29/06, G09B 7/00

(54) **VERFAHREN UND VORRICHTUNG ZUM AUFBAU EINES VIRTUELLEN ELEKTRONISCHEN LEHRSYSTEMS MIT INDIVIDUELLER INTERAKTIVER KOMMUNIKATION**
METHOD AND DEVICE FOR SETTING UP A VIRTUAL ELECTRONIC TEACHING SYSTEM WITH INDIVIDUAL INTERACTIVE COMMUNICATION
PROCEDE ET DISPOSITIF POUR CREER UN SYSTEME D'ENSEIGNEMENT ELECTRONIQUE VIRTUEL FAISANT INTERVENIR UNE COMMUNICATION INTERACTIVE INDIVIDUELLE

(30) Priorität: 24.08.2003 DE 10339436
(43) Veröffentlichungstag der Anmeldung: 02.11.2006
(73) Patentinhaber: NOVA Informationstechnik GmbH, 96215 Lichtenfels (DE)
(72) Erfinder: PABST, Michael, J., 96231 Bad Staffelstein (DE)
(74) Vertreter: Dreykorn-Lindner, Werner
(86) Internationale Anmeldenummer: PCT/EP2004/009303
(87) Internationale Veröffentlichungsnummer: WO 2005/020537

(56) Entgegenhaltungen:
- EP-A- 0 689 327
- EP-A- 1 035 722
- WO-A-01/35240
- WO-A-02/03744
- DE-A- 19 820 688
- US-A- 6 115 755

## Beschreibung

Die Erfindung betrifft in erster Linie ein Verfahren zum Aufbau eines virtuellen elektronischen Lehrsystems mit individueller interaktiver Kommunikation (Patentanspruch 1). Weiterhin betrifft die Erfindung ein virtuelles elektronisches Lehrsystem zur Durchführung des Verfahrens (Patentanspruch 5).

Die Bereiche des e-Learning, des Tele-Teaching und des Remote-Training, ebenso Bereiche der innerbetrieblichen Aus- und Weiterbildung, der Schulung von Service-Einheiten usw., werden ganz allgemein dadurch bestimmt, dass sich unterschiedlich vorgebildete Benutzer mit unterschiedlicher Geräteausstattung (Mikrocomputer und Peripherie) für eine definierte Zeit zu definierten Lehrveranstaltungen zusammenfinden.

Die Mehrzahl von Verbindungen zum Internet oder zu anderen Datendiensten wird mit Modems über ein Telefonkabel, d.h. eine Kupferdoppelader (so genanntes a/b Adernpaar bzw. Teilnehmeranschlussleitung), hergestellt, welches eigentlich zur Sprachübertragung im Bereich vom etwa 300 Hz bis 3400 Hz vorgesehen ist (POTS). Um ein Höchstmass an Übertragungssicherheit zu gewährleisten, wird in zunehmendem Maße die bestehende analoge Übertragungstechnik durch die digitale Übertragungstechnik ersetzt. Bei der drahtgebundenen Übertragungstechnik kommen dabei vorwiegend Systeme zum Einsatz, welche nach dem Standard für "Integrated Services Digital Network", kurz ISDN, arbeiten.

Mit Hilfe einer Frequenzweiche, zum Beispiel einer Splittermatrix, werden Sprache und Daten in der Regel durch passive Tiefpass- bzw. Hochpassfilter getrennt und auf das Telefonkabel gegeben (beispielsweise für ein DSL-Übertragungsverfahren). Die Sprachanschlüsse gehen auf eine klassische Vermittlungsstelle, die als PSTN (Public Switched Telefon Network) bezeichnet wird, und die Daten gehen nach dem Splitter auf einen DSLAM (Digital Subscriber Line Access Multiplexer - ein Gerät, welches die Signale mehrerer DSL-Leitungen in einen Breitbandkanal umsetzt). Eine scharfe Trennlinie zwischen herkömmlichen Telekommunikationsnetzen und Computer-Datennetzen kann an dieser Stelle daher nicht gezogen werden. An beiden Leitungsenden der Verbindung werden DSL-Modems als das wichtigste Element für eine DSL-Verbindung angeschaltet.

Im DSLAM kann beispielsweise die ADSL-Technik (Asymmetric Digital Subscriber Line, asymmetrisches DSL-Datenübertragungsverfahren) genutzt werden. Darunter wird eine Übertragungstechnik verstanden, die mit hoher Bandbreite sowohl Plain Old Telefon Services (POTS) oder ISDN für die Gesprächsübertragung als auch einen unsymmetrischen Multimediadienst ohne Regeneratoren auf dem gleichen Adernpaar störungsfrei zulässt. Asymmetrisch (ADSL) deshalb, weil in der Richtung vom Nutzer zum Netz (upstream) die Übertragung relativ niederratig (beispielsweise mit ca. 800 KBit/s), in der Richtung vom Netz zum Nutzer (downstream) hingegen relativ hochratig (beispielsweise mit bis zu ca. 8 MBit/s) erfolgt. Neben der ADSL-Technik sind auch andere DSL-Techniken gebräuchlich, beispielsweise HDSL = High Data Rate Digital Subscriber Line; SDSL = Single Line Digital Subscriber Line; MDSL = Multirate Digital Subscriber Line; RADSL = Low Rate Adaptive Digital Subscriber Line und VDSL = Very High Rate Digital Subscriber Line, die jede für den Anwendungsfall optimiert sind und unter dem Oberbegriff xDSL-Übertragungstechnik zusammengefasst werden.

Eine weitere Möglichkeit kontinuierliche Datenströme, z.B. Sprach- oder Videokommunikation, kostengünstig übermitteln zu können, bieten paketvermittelnde Kommunikationsnetze, wie z.B. LANs (Local Area Networks), MANs (Metropolitan Area Networks) oder WANs (Wide Area Networks). Auf dieser Technik basiert beispielsweise die sogenannte Intemettelephonie, die häufig auch als "Voice over Internet Protocol" (VoIP) bezeichnet wird. Der parallele Betrieb eines Audio-Netzes mit einem PC-Netz bei einer Lehranlage ist beispielsweise in der DE 42 38 848 C2 beschrieben. Das PC-Netz ist zur visuellen Datenübertragung vorgesehen und ist von dem aus Einplatinenrechnern sowie D/A-Wandlern und A/D-Wandlem zur Tonübertragung gebildeten Audio-Netz unabhängig verkabelt. Ein im zentralen Steuerpult der Lehrkraft angeordneter Steuerrechner steuert sowohl das PC-Netz als auch das Audio-Netz mit einem Steuerungsprogramm [= Steuersoftware] mit einer gemeinsamen Benutzeroberfläche für das PC-Netz und das Audio-Netz zur Koordinierung des gleichzeitigen Betriebes beider Netze. Das zentrale Steuerpult dient also sowohl zur Steuerung eines PC-Netzes als auch zur Steuerung des Audio-Netzes. Die Steuersoftware schließt auch Überwachungsfunktionen ein. So ist z. B. eine optische Anzeige des aktuellen Betriebszustandes des Einplatinenrechners, des Schülerarbeitsplatzes oder des Schüler-PCs am Monitor des Steuerrechners möglich. Auch die aktuellen Bearbeitungszustände von Arbeitsanweisungen oder Arbeitstexten der einzelnen Schüler können am Monitor des Steuerrechners überprüft werden. Eine optische Anzeige der aktuellen Betriebszustände einzelner Bauteile des Steuerpultes ist möglich. Die Rufverbindung zwischen Lehrkraft und Schüler wird ebenfalls durch die Steuersoftware gesteuert. Sämtliche Ereignisse, die während einer Unterrichtsstunde stattfinden, können protokolliert und als Unterrichtsprotokoll entweder automatisch auf dem Festplattenspeicher des zentralen Steuerrechners abgespeichert oder ausgedruckt werden. Wegen der einheitlichen Benutzeroberfläche für PC-Netz und Audio-Netz ist der Klassenspiegel in beiden Netzen immer gleich.

Die Kommunikation erfolgt somit, wegen der genannten Inhomogenität, über Verbindungen ganz unterschiedlicher Bandbreite, d.h. beispielsweise 56 KBit Analoganschluss oder 64 KBit -ISDN oder DSL oder - soweit in einem LAN eingebunden - über 100 MBit Twisted Pair-Leitung, oder über Wähl-Verbindungen 2 MBit und besser, oder über Standleitungen X.25. Dementsprechend ist eine ganze Vielzahl von Schnittstelleneinrichtungen bekannt, beispielsweise
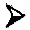 ISDN S₀ - Schnittstellen,
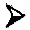 LAN-Interface FE (mit Programmspeicher) zum PCI-Bus,
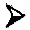 externes LAN-Interface LAN (mit Programmspeicher) als 10/100 Mbit/s Ethernet oder Token-Ring,
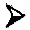 WAN-Schnittstellen WAN: X.21, V.35, G.703/704 bis 2 Mbit/s.

Soweit zum einen Inhalte auf einem Content-Server vorliegen, der über das Internet erreicht werden kann und soweit die Kommunikation in Form von Video-Conferencing ebenfalls über das Internet erfolgt, sind hierbei unterschiedliche Protokolle zu beachten. Für diese auf dem Internet-Protokoll (IP) aufsetzenden Protokolle hat sich bisher kein einheitlicher Standard herausgebildet. Für gewisse Anwendungsbereiche gibt es gewisse "Favoriten" (z. B. H323 für Video-Konferenzen oder Ähnliches).

Aus der WO 03/046861 A1 ist ein elektronisches Lernsystem bekannt, bei dem die Kommunikation zwischen Lehrer und Schüler über ein LAN erfolgt, an welches eine zentrale DVB-Empfangsstation (digital video broadcasting) mit DVB-Tuner/Empfänger, zentraler Steuereinheit und Massenspeicher angeschlossen ist. Der DVB-Tuner/Empfänger kann als set-top box ausgeführt werden, welche die DVB-Informationen empfängt und mittels einer als PC (personal computer) ausgestalteten Steuereinheit diese Informationen über das LAN zum Lehrercomputer weitervermittelt. Die zentrale DVB-Empfangsstation kann bei entsprechender Berechtigung auch über einen Rückkanal eines Telekommunikationsnetzwerkes bestimmte Dienste beim DVB-Dienstanbieter abrufen.

Weiterhin ist aus der WO 03/026248 A1 ein elektronisches Lernsystem bekannt, bei dem die Kommunikation zwischen Schüler und Lehrer über Teilnehmeranschlussleitungen von einer zentralen Steuereinrichtung (dort als OLMS open learning management system bezeichnet) gesteuert wird. Mit der zentralen Steuereinrichtung ist eine Datenbank mit Steuereinrichtung (dort als LMS learning management system bezeichnet) verbunden, welche den unberechtigten Zugriff auf Programme und Daten verhindern und entsprechend dem Lernfortschritt den Zugriff auf Lerninhalte steuern.

Ähnliche Ausgestaltungen eines elektronischen Lernsystem mit Zugriff entsprechend dem Lernfortschritt und Kommunikation über das Internet sind aus der WO 02/37697 A2 oder aus der WO 02/075694 A1 bekannt.

Schließlich ist aus der WO 02/097654 A1 ein elektronisches Lernsystem bekannt, bei dem zentral das Profil des einzelnen Schülers abgespeichert ist, wobei zu dem Profil neben dem Lernfortschritt auch die technische Ausstattung beim Schüler einschließlich der Bandbreitenbegrenzung auf der Teilnehmeranschlussleitung gehört. Diese Bandbreitenbegrenzung kann von dem Schüler oder von dem Systemadministrator für eine Gruppe von Schülerin spezifiziert werden.

Die hier beschriebene Situation hat dazu geführt, dass sich e-Learning und Tele-Teaching trotz des sinnvollen Ansatzes, die didaktischen Fähigkeiten von Dozenten, außerhalb des Klassenzimmers und der Hörsäle einem größeren Auditorium zugänglich zu machen und aufwendig erarbeitete Unterrichtsmaterialien ebenfalls einer größeren Benutzergruppe zugänglich zu machen, bisher nur unzureichend durchsetzen konnten.

Bisher verfügbare, überwiegend ausschließlich Software-basierende Lösungen verlangten nach einer relativ hohen Homogenität bei der Geräteausstattung und bei der den Teilnehmern zur Verfügung stehenden Bandbreite und setzten überdies voraus, dass die entsprechende Software auf den Geräten der an einer Tele-Teaching- oder e-Learning-Veranstaltung teilnehmenden Personen zu diesem Zweck zu installieren war.

Wegen der oben ausgeführten zeitlichen Begrenztheit solcher Veranstaltungen, aber auch zum Teil wegen organisatorischer Probleme (Änderung der EDV-Struktur innerhalb eines Unternehmens), ließen sich diese Homogenitätsbedingungen nicht oder nur schwer erfüllen. Dabei liegt gerade in der Möglichkeit, sich zeitlich begrenzt einer dedizierten Wissensvermittlung widmen zu können, der eigentliche Vorteil von e-Leaming und Tele-Teaching im Unterschied zur Notwendigkeit von so genannten Präsenzphasen.

Weiterhin ist aus der WO 01/35240 A1 ein skalierbares, multimediales Schaltnetzwerk auf der Basis eines Server-Client-Konzepts. Darunter wird beim Gegenstand der WO 01/35240 A1 ein einheitlicher Internetportal Server UIP Server und ein zugehöriger einheitlicher Internetportal Client UIP Client verstanden, wobei der Datenaustausch zwischen den beiden Computern gemäß dem Internetprotokoll in Datenpaketen erfolgt und diese gemäß dem zum Internetprotokoll IP zugehörigem TCP Protokoll versendet werden. Die medienunabhängigen Kommunikationsprotokolle TCP/IP (Transmission Control Protocol/Internet Protocol) werden auf allen Teilnetzen im Internet eingesetzt. TCP ist in der vierten Schicht (transport-Schicht) angesiedelt und ermöglicht eine verbindungsorientierte Datenübertragung, welche IP überlagert ist. Das TCP-Protokoll mit Gesamtlänge von 32 Bits ist wie folgt aufgebaut: Quellport, Zielport, Sequenznummer, Bestätigungsnummer, Offset, reservierter Raum (6 Bits), Flags, Fenster (8 Bits), Prüfsumme, Dringlichkeitsangabe, Ergänzende Informationen (Optionen), Füllbits und eigentlicher Informationsbereich. TCP zergliedert die zu übermittelnde Datei in kleine Datenpakete, die dann nummeriert als IP-Pakete im Netz transportiert werden. Beim Empfänger setzt TCP die IP-Pakete in richtiger Reihenfolge wieder zusammen. IP gehört zur dritten Schicht des OSI-Modells, wobei die einzelnen Daten mit einem Adresskopf versehen werden und ermöglicht es ebenfalls, dass Daten, die übertragen werden sollen, in Form von nummerierten Paketen zu versenden und erst beim Empfänger (Zieladresse) wieder zusammengesetzt werden. Bei dieser verbindungslosen Datenübertragung ist die Transportreihenfolge der IP-Pakete (Datagramm) beliebig und jeder angeschlossene Rechner erhält eine individuelle IP-Adresse, die weltweit gültig ist. Unter IP(v4) ist die 32 Bit Gesamtadresse wie folgt gegliedert: Versionsnummer im IP-System, Kopfgröße (-länge) (IHL Internet Header Length), Dienstart (Priorität und spezifische Anforderungen), Datagramm-Länge (Gesamtgröße des Datagramms in Byte), Kennung (Identification), Steuerungsinformationen für die Fragmentierung (Flags), Positionsinformation für Fragmente im Datagramm (Fragment-Offset), Lebensdauer des Datagramms im Netz (Time to Live), Protokollangaben für die Transportschicht (Protocol), Prüfsumme für den IP-Protokollkopf (Header-Checksum) und Füllbits (Padding) und unter IP(v6) ist die 128 Bit Gesamtadresse wie folgt aufgebaut: Version, Priority, Angaben zur Größe der Pakete der nachfolgenden Schicht (Payload-lenght), Informationen zum Kopf des nächsten Datagramms sowie Anzahl der Router zwischen Quelle und Senke (Hop Limit). Ihr Aufbau ist somit <Subnetz-Bezeichnung><Rechner-Bezeichnung>. Jedes Paket sucht seinen individuellen Weg zwischen Sender und Empfänger, so dass eine hohe Leitungsauslastung, eine schnelle, effektive und weitgehend zuverlässige Datenübertragung ermöglicht wird. Probleme können dabei auftreten, wenn die Pakete verändert, unvollständig und nicht in der richtigen Reihenfolge (bedingt durch Netzverzögerungen) ankommen bzw. bei zeitkritischen Anwendungen. Das in der WO 01/35240 A1 beschriebene skalierbare, multimediale Schaltnetzwerk ermöglicht die Übertragung zwischen einer Vielzahl von Internetportal Client UIP Client (Absendestationen) zu zugeordneten Internetportal Server UIP Server (Empfangsstationen) auf der Basis eines einheitlichen speziellen Protokolls und von Zieladressen des Empfangsrechners UIP Server. Der Nutzer kann zwischen vom UIP Client (bzw. UIP Server) angebotene Dienste auswählen, diese Funktionalität wird im zugeordneten UIP Client gespeichert und dann teilt sich der Nutzer den betreffenden UIP Client mit anderen Nutzern. Der Nutzer braucht sich beim Verbindungsaufbau zum betreffenden UIP Client nur zu legitimieren (über einen Kartenleser oder durch Eingabe einer Legitimation mit PIN-Nummer) und der UIP Client baut dann die vom Nutzer gewünschte Verbindung über das skalierbare, multimediale Schaltnetzwerk zum UIP Server und dieser dann beispielsweise über das Telekommunikationsnetz auf.

Schließlich ist - zur Vermeidung der Herstellung von DSL-Modems für verschiedene Protokolle - aus der EP 1 0 35 722 A1 ein Verfahren und eine Vorrichtung zur dynamischen Konfiguration von Kommunikationseinheiten für verschiedene DSL- Protokolle (wie PPP, ATM oder HDLC) bekannt. Hierzu ist im Modem ein DSL-Router integriert, welcher eine DSL-Schnittstelle und Fernzugriffsfunktionen aufweist.

Wie die vorstehende Würdigung des Standes der Technik aufzeigt, sind unterschiedlich ausgestaltete Verfahren und Vorrichtungen zur Durchführung von Tele-Teaching- oder e-Learning-Veranstaltung bekannt Dabei erfordern die Computernetzwerke bzw. Netzabschlusstechnik in der Regel spezielle Hard- und Softwarekomponenenten mit einer Reihe von teueren, für die Kommunikation speziell ausgelegten Komponenten, wie Kommunikations-Server für die Verbindung zu einem anderen Netz (öffentliches Datennetz, anderes LAN oder einem Hostsystem) bzw. Fileserver, welcher die Daten verwaltet und diese dem Teilnehmer im Netz zur Verfügung stellt sowie entsprechender Netzwerk-Zugangsprotokolle, z.B. CSMA/CD (Carrier Sense Multiple Access/Collision Detection), Token-Passing (Bitmuster als Berechtigungsmarke) oder TCP/IP (Transmission Control Protocol/Internet Protocol). Wenig Beachtung fanden jedoch der Personenkreis der Schüler und die dort vorhandene Ausstattung. Deshalb fehlen in der Praxis kostengünstige e-Learning- und Tele-Teaching-Systeme, welche eine individuelle, insbesondere automatisch anpassbare, interaktive Kommunikation sicherstellen. Besonders bedeutsam ist dies, weil die Telekommunikations- und Computerindustrie als äußerst fortschrittliche, entwicklungsfreudige Industrien anzusehen sind, die sehr schnell Verbesserungen und Vereinfachungen aufgreifen und in die Tat umsetzen.

Der Erfindung liegt die Aufgabe zugrunde, ein Verfahren und eine Vorrichtung zum Aufbau eines virtuellen elektronischen Lehrsystems anzugeben, welches einen kostengünstigen Aufbau beliebig vernetzbarer Arbeitsplätze mit individueller interaktiver Kommunikation unter Berücksichtigung der technischen Ausstattung der an der e-Learning- oder Tele-Teaching-Veranstaltung teilnehmenden Personen ermöglicht.

Diese Aufgabe wird erfindungsgemäß bei einem Verfahren zum Aufbau eines virtuellen elektronischen Lehrsystems mit einem zentralen Content-Server für eine e-Learning- oder Tele-Teaching-Veranstaltung und mit einem Arbeitsplatz der an der e-Learning- oder Tele-Teaching-Veranstaltung teilnehmenden Personen unter Benutzung eines Telekommunikationsnetzes mit an eine Vermittlungsstelle angeschlossenem Hauptverteiler, wobei an den Hauptverteiler ein Zugangsmultiplexer und/oder ein Splitter angeschlossen oder im Hauptverteiler integriert sind, und mit analogen oder digitalen Telekommunikationseinrichtungen, wobei eine an die Telekommunikationseinrichtung und an den Arbeitsplatz anschließbare oder in Verbindung stehende Schnittstellenschaltung vorgesehen ist, und wobei mit jedem Verbindungsaufbau zunächst die maximal zur Verfügung stehende Bandbreite einer anstehenden digitalen Verbindung ermittelt wird, danach eine gespeicherte Testinformationen zur Gegenstelle gesendet wird und danach eine in Rückrichtung vom der Gegenstelle empfangene Quittung ausgewertet wird, wodurch die an der Telekommunikationseinrichtung zur Verfügung stehende Bandbreite getestet wird, nach Patentanspruch 1 dadurch gelöst, dass zur Vermeidung von "time-out-Problemen" die Schnittstellenschaltung zum automatische Tests der an der e-Learning- oder Tele-Teaching-Veranstaltung teilnehmenden Person zur Verfügung stehenden technischen Ausstattung durchführt, indem:
- mit jedem Verbindungsaufbau über eine Teilnehmeranschlussschaltung oder einem Teilnehmermodem und Splitter oder einem Netzabschluss, die Teilnehmeranschlussleitung und dem Hauptverteiler zum Content-Server zunächst ermittelt wird, ob eine analoge oder digitale Verbindung ansteht,
- danach eine gespeicherte Testinformationen zum Content-Server gesendet wird,
- eine in Rückrichtung vom Content-Server empfangene Quittung ausgewertet wird und
- indem sich die Schnittstellenschaltung derart meldet und den vollständigen Empfang eines Bildinhaltes bestätigt, dass der Arbeitsplatz in der Tele-Teaching- oder e-Learning- Veranstaltung verbleibt, auch wenn eine breitbandige Übertragung nicht möglich ist.

Das Testen der an einer Telekommunikationseinrichtung zur Verfügung stehenden Bandbreite ist an sich bekannt Beispielsweise ist aus der DE 197 13 946 A1 ein Faksimileapparat bekannt, der in der Lage ist, die Kommunikationseffizienz und die Kommunikationsverlässlichkeit zu erhöhen, indem basierend auf einer Neusendungsbedingung oder Bedingungen, die durch eine Sendestation oder eine Empfangsstation bekannt sind, zu bestimmen, ob oder ob nicht die Senderate heruntergeschaltet wird und ein Neusenden fortgesetzt wird. Weiterhin ist der Faksimileapparat in der Lage ist, die Senderate angemessen herunterzuschalten, um so Fehler zu verringern und dadurch die Effizienz und Verlässlichkeit der Kommunikation zu verbessern. Hierzu beinhaltet der Faksimileapparat ein Modem, das in der Lage ist, eine Datenrate für eine Bilddatenkommunikation in Übereinstimmung mit der Übertragungsqualität bzw. Sendequalität einer Kommunikationsschaltung bzw. -Leitung zu bestimmen. Weiterhin verwendet der Faksimileapparat ein Protokoll, das es der Sendeseite oder der Empfangsseite ermöglicht, ein Herunterschalt-Verfahren auszuführen, um die Datenrate herunterzuschalten, und zwar zu Beginn eines Steuerkanals, der dazu dient, einer Sendeseite und einer Empfangsseite zu ermöglichen, Steuersignale auszutauschen. Die Steuersignale beinhalten eine Fehler-Rahmen-Neusendefunktion und folgen einem Primärkanal, der einer Datenkommunikation zugeordnet ist. Im Einzelnen weist der Faksimileapparat eine Datenraten-Detektionseinrichtung, um eine Datenrate zu der Zeit des Neusendens eines Fehler-Rahmens zu detektieren, eine Zähleinrichtung, um eine Anzahl von Neusendevorgängen zu zählen, die bei einer selben Datenrate bewirkt werden, eine Bestimmungseinrichtung, um zu bestimmen, ob oder ob nicht die Neusendevorgänge, die bei derselben Datenrate bewirkt wurden, in einer einer vorauswählbaren Anzahl entsprechenden Häufigkeit wiederholt worden sind und eine Steuereinrichtung, um das Herunterschaltverfahren auszuführen, wenn das Neusenden bei derselben Datenrate entsprechend der vorauswählbaren Häufigkeitsanzahl wiederholt worden ist, auf. Ferner ist eine Rahmenanzahl-Detektionseinrichtung vorgesehen, um eine Anzahl von Rahmen jedes Mal zu detektieren, wenn Fehlerrahmen neu gesendet werden. Basierend auf einem G3-Standardübertragungs-Steuerverfahren weist der Faksimileapparat eine Schaltungsbedingungs-Überwachungseinrichtung, um während der Quittierung bzw. während des Empfangs von Bilddaten eine Schaltungsbedingung bzw. einen Leitungszustand zu überwachen, und eine Ratenänderungs-Anforderungseinrichtung auf. Dadurch kann eine Empfangsseite veranlasst werden, nach oder während des Empfangs einer Seite von Bilddaten ein Signal zu senden, das dazu dient, ein Herabschalten oder ein Hochschalten einer Senderate auf der Grundlage der Schaltungsbedingung bzw. des Leitungszustandes anzufordern, die bzw. der durch die Schaltungsbedingungs-Überwachungseinrichtung überwacht wird. Im Einzelnen überwacht die Schaltungsbedingungs-Überwachungseinrichtung die Schaltungsbedingung bzw. den Leitungszustand in Termen eines EQM-Werts, und die Ratenänderungs-Anforderungseinrichtung fordert das Herunterschalten an, wenn der EQM-Wert zunimmt, oder fordert das Hochschalten an, wenn der EQM-Wert abnimmt. Schließlich weist der Faksimileapparat eine Tabelle auf, die EQM-Werte und Transmissionsraten in einem eins-zu-eins-Verhältnis auflistet.

Weiterhin sind aus der DE 101 13 196 A1 Verfahren und Systeme für eine Datenratenerfassung für serielle Mehrfach-Geschwindigkeits-Einbettungs-Takt-Empfänger bekannt. Um zwei oder mehrere unterschiedliche Datenraten auf eine stabile Weise einfach und automatisch zu erfassen erfolgt bei einem ersten Verfahren zunächst ein statistisches Prüfen von Flankenplazierungs- und Zeitgebungs-Charakteristika des ankommenden Datenstroms, dann ein Identifizieren einer Signatur, die den Flankencharakteristika zugeordnet ist, auf der Basis der Flankencharakteristika; und schließlich ein Bestimmen einer Datenrate, mit der der Datenstrom übertragen wird, auf der Basis der identifizierten Signatur. Ein alternatives Verfahren weist folgende Schritte auf:
- Liefern eines Taktsignals mit einer ersten Datenrate, wobei das Taktsignal Taktflanken aufweist;
- Verriegeln der Taktflanken mit Datenübergängen eines ankommenden Datenstroms;
- Unterscheiden zwischen Datenübergängen, die bei geraden und ungeraden Taktflanken auftreten;
- Bestimmen, ob die Datenübergänge im Mittel lediglich entweder bei ungeraden oder geraden Taktflanken auftreten, oder ob die Datenübergänge im Mittel sowohl bei ungeraden als auch geraden Taktflanken auftreten; und
- Feststellen einer Datenrate der ankommenden Daten auf der Basis, wo die Datenübergänge auftreten.

Das System weist einen Phasenkomparator auf, der so konfiguriert ist, dass dieser einen mit hoher Geschwindigkeit übertragenen Datenstrom empfängt und jedes Mal einen Verweis ausgibt, wenn der Datenstrom einen Datenübergang aufweist. Ein spannungsgesteuerter Oszillator ist mit dem Phasenkomparator verbunden und liefert ein Taktsignal mit Taktflanken. Das Taktsignal ist mit dem Datenstrom verriegeh. Eine Datenratenerfassungsschaltung ist mit dem Phasenkomparator verbunden und empfängt die Reihe von Pulsen, die durch den Phasenkomparator ausgegeben werden. Auf der Basis der empfangenen Pulse stellt die Datenratenerfassungsschaltung die Datenrate fest. Im einzelnen weist die Datenratenerfassungsschaltung eine Flankenverhältnisdetektorschaltung und eine Schwellenschaltung auf, um eine Datenrate auf der Basis der Übergangsdichte von Datenströmen über eine gegebene Zeitdauer festzustellen.

Weiterhin ist aus der DE 199 59 179 A1 ein Verfahren zur dynamischen Änderung von Ratenanpassungsfaktoren in einem Funk-Kommunikationssystem bekannt. Um die Genauigkeit der Ratenanpassungsfaktoren zu verbessern, werden einer oder mehrere Ratenanpassungsfaktoren dienstspezifisch bestimmt, die Daten zum Übertragen entsprechend der bestimmten Ratenanpassungsfaktoren verarbeitet und in einen Übertragungsrahmen eingetragen und während der Übertragung erfolgt eine aktualisierende Bestimmung und Anpassung der Ratenanpassungsfaktoren. Die Anpassung erfolgt dabei mittels einer zusätzlichen Regelschleife durch Variation der Ratenanpassungsfaktoren dynamisch. Hierbei wird ein eine Bit- und/oder Blockfehlerrate übertragender Transportkanal durch die empfangende oder die sendende Funkstation überprüft und bei einer zu großen Abweichung von einem Zielwert wird eine Korrektur des jeweiligen Ratenanpassungsfaktors eingeleitet.

Schließlich ist aus dem DE 296 23 893 U1 ein Initialisierungs-Protokoll für adaptive Datenraten und zugehörigem Transceiver, insbesondere zur Kommunikation zwischen zwei Asymmetric-Digital-Subscriber-Line-(ADSL)-Modems bekannt. Um die Anpassung von Datenraten ohne Neustart zu unterstützen, d.h. ohne erneute Ausführung aller vorherigen Identifizierungs- und Initialisierungsschritte, enthält das Initialisierungs-Protokoll eine erste Phase (PROPOSAL), in der ein erster Transceiver eine begrenzte Menge von Datenraten-Werten für besagte Datenrate vorschlägt, eine zweite Phase (CHANNEL ANALYSIS), ausgeführt zwischen erster Phase (PROPOSAL) und einer dritten Phase (SELECTION), in der eine höchste Datenrate für die Übertragung über eine Kommunikationsverbindung zu einem zweiten Transceiver gemessen wird, die dritte Phase, in der mitgeteilt wird, welcher der Datenraten-Werte für die Datenrate ausgewählt wird und eine vierte Phase (CONFIRMATION), in der bestätigt wird, dass der ausgewählte Datenraten-Werte zur Datenrate für die zukünftige Übertragung wird. Vor der Ausführung der vierten Phase kann der erste Transceiver oder der zweite Transceiver einen neuen Datenraten-Vorschlag ankündigen, worauf die erste Phase erneut ausgeführt wird. Dabei basiert eine Ankündigung des neuen Datenraten-Vorschlages auf Ergebnissen der zweiten Phase. Wenn keiner der zuerst vorgeschlagenen Datenraten-Werte die höchste unterstützte Datenrate auf seiner unteren Seite annähert, kann ein Transceiver den anderen Transceiver über seinen Wunsch informieren, einen neuen Vorschlag zu formulieren. Dieser neue Vorschlag kann die höchste unterstützte Datenrate und einige niedrigere Datenraten-Werte enthalten, die ebenfalls für den Transceiver akzeptierbar sind, welcher den neuen Datenraten-Vorschlag erzeugt. Auf diese Weise kann eine Neu-Ausführung der ersten, zweiten und dritten Phase zu einer letztendlich ausgewählten Datenrate führen, die an die Kapazität der Verbindungsleitung richtig angepasst ist. Diese Datenrate wird in der vierten Phase bestätigt. Wenn also einer der Transceiver aus irgendeinem Grund mit den im ersten Vorschlag vorgeschlagenen Datenraten-Werten nicht zufrieden ist, kann er einen neuen Vorschlag ankündigen, auch wenn ihm die Kapazität der Verbindung noch nicht bekannt ist.

Das erfindungsgemäße Verfahren weist den Vorteil auf, dass eine einheitliche Anschaltung zum Zwecke der Prüfung der Anschlussleitung, insbesondere zur Ermittlung der zur Verfügung stehenden Bandbreite vorliegt. Dadurch, dass die Prüfung automatisch vorgenommen wird, sind sowohl Lehrer als auch Schüler von der Überprüfung der zur Verfügung stehenden Bandbreite bei Inbetriebnahme oder während des Betriebs entlastet. Dabei muss der Test nicht vor Ort durchgeführt, sondern kann innerhalb des Systems von einem beliebigen Ort aus durchgeführt werden.

Weiterhin wird diese Aufgabe erfindungsgemäß bei einem virtuellen elektronischen Lehrsystem aufgebaut unter Benutzung eines Telekommunikationsnetzes, welches einen an eine Vermittlungsstelle angeschlossenem Hauptverteiler, mit an den Hauptverteiler angeschlossenen oder integrierten Zugangsmultiplexer und/oder ein Splitter, Arbeitsplätze der an einer e-Learning- oder Tele-Teaching-Veranstaltung teilnehmenden Personen und analoge oder digitale Telekommunikationseinrichtungen aufweist, und mit einer an die Telekommunikationseinrichtung anschließbaren Schnittstellenschaltung, nach Patentanspruch 5 dadurch gelöst, dass zur Vermeidung von "time-out-Problemen" die Schnittstellenschaltung zum kontinuierlichen automatischen Testen der an der e-Learning- oder Tele-Teaching-Veranstaltung teilnehmenden Person zur Verfügung stehenden technischen Ausstattung mit jedem Verbindungsaufbau einerseits über eine Teilnehmeranschlussschaltung oder einem Teilnehmermodem und Splitter oder einem Netzabschluss, die Teilnehmeranschlussleitungen und dem Hauptverteiler mit dem Content-Server und andererseits über mindestens eine standardisierte Schnittstelle mit dem Arbeitsplatz in Verbindung steht und ermittelt, ob eine analoge oder digitale Verbindung ansteht, eine zum Content-Server gespeicherte Testinformation sendet und eine in Rückrichtung vom Content-Server empfangene Quittung auswertet und dass sich die Schnittstellenschaltung derart meldet und den vollständigen Empfang eines Bildinhaltes bestätigt, dass der Arbeitsplatz in der Tele-Teaching- oder e-Learning-Veranstaltung verbleibt, auch wenn eine breitbandige Übertragung nicht möglich ist.

Im Vergleich zu den elektronischen Lehrsystemen nach dem Stand der Technik weist das erfindungsgemäße Lehrsystem die Vorteile auf, dass eine kostenintensive Vorab-Installation nicht erforderlich ist, dass die Schnittstellenschaltung eine einfache Erweiterung oder Veränderung des Lehrsystems einschließlich der Bildung neuer Nutzergruppen und eine wesentliche Steigerung des Einsatzbereiches ermöglicht und dass insbesondere das Anschalten eines neuen Schüler des Lehrsystems sofort und auch von einem ungeübten Benutzer erfolgen kann. Die erfindungsgemäße Schnittstellenschaltung weist den Vorteil auf, dass auf überraschend einfache Art und Weise eine individuelle Konzeption des virtuellen elektronischen Lehrsystems durch den Anwender ermöglicht wird. Im Vergleich zum Stand der Technik "gestaltet" der Anwender das virtuellen elektronischen Lehrsystem entsprechend seiner Anforderungen mittels menügesteuerten Programmen selbst, so dass die Softwarefunktionen nicht begrenzt sind und der Hersteller der erfindungsgemäßen Schnittstellenschaltung nicht - mit Rücksichtnahme auf eine möglichst universell einsetzbare Schnittstellenschaltung - eine Auswahl zwischen zugeordneten Funktionen treffen muss.

Weiterhin ist von Vorteil, dass eine dezentrale Steuerung eines am Arbeitsplatz ablaufenden Prüfprozesses ermöglicht wird. Es ist auch möglich, von jedem beliebigen Punkt des Telekommunikationsnetzes aus die Prüfungen mittels PC/Webserver bzw. mittels mobilen Messplatz (GSM bzw. bei höheren Bandbreiten UMTS) durchzuführen, wobei die Netzanbindung über eine IP-Schnittstelle (auch paketvermitteltes Netz) erfolgen kann. Gegebenenfalls können so auch Daten verändert werden, die der Prüfung und Instandhaltung eines Arbeitsplatzes dienen. Werden die Befehle von einem zentralen Arbeitsplatz (Lehrkraft) aus übermittelt, steht ein besonders leistungsfähiges Verfahren zur Einführung neuer Funktionen oder zur Änderung bestehender Funktionen zur Verfügung, da die Änderungen nur im zentralen Arbeitsplatz erfolgen müssen und nicht in den einzelnen Arbeitsplätzen. Weiterhin liegt dem mit der Prüfung und Lehrgangsdurchführung betrauten Personal unmittelbar nach dem Ende einer Prüfung das Ergebnis vor. Darauf basierend können rasch weitere Entscheidungen getroffen, beziehungsweise weitere Zuschaltungen übermittelt werden,

In Weiterbildung der Erfindung ist, gemäß Patentanspruch 4, in der Schnittstellenschaltung eine Zugangsberechtigung abgespeichert, wodurch die Steuerung von Verbindungsaufbau und Prüfprozesses gegen unbefugten Zugriff gesichert ist und der Ablauf wird protokolliert.

Diese Weiterbildung der Erfindung weist den Vorteil auf, dass die Prüfung oder Instandhaltung nur durch das damit betraute Personal erfolgen kann. Es ist auch möglich, den Zugang zu verschiedenen Gruppen von Prozessen mit verschiedenen Zugangscodes zu sichern, um so innerhalb des Personals die Zuständigkeiten abzugrenzen oder unterschiedlich zu verteilen. Beispielsweise können auch CUG (closed user group) über ISDN gebildet werden, so dass die bisher benutzte Methode der Rückruf-Nummern entfallen kann und beispielsweise ein Versetzen der Schnittstellenschaltung nicht zu einer Software-Änderung führt.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- FIG. 1: das Blockschaltbild einer ersten Ausführungsform,
- FIG.2: das Blockschaltbild einer zweiten Ausführungsform des erfindungsgemäßen elektronischen Lehrsystems und
- FIG. 3: eine Ausführungsform der erfindungsgemäßen Schnittstellenschaltung SS von der Anschlussseite her gesehen.

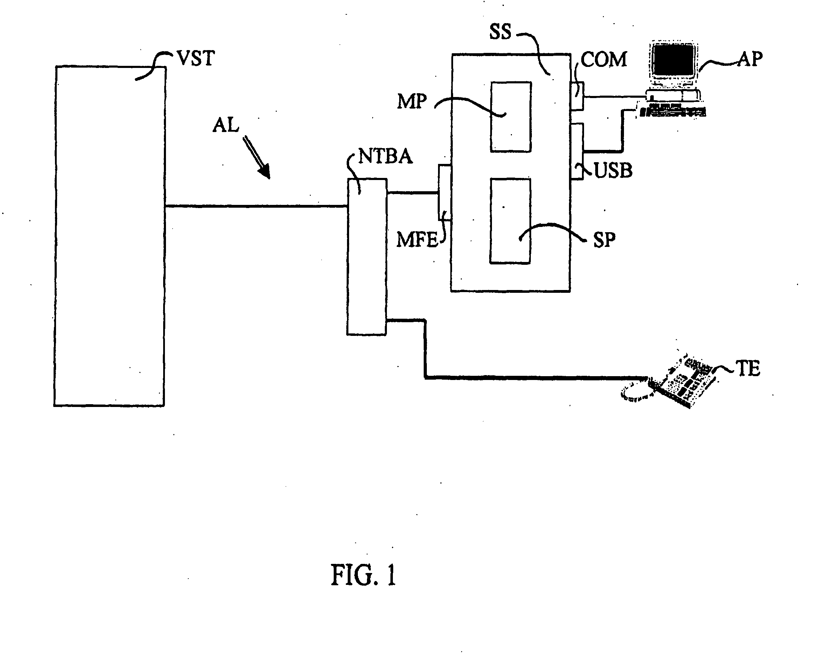

Bei der in FIG. 1 dargestellten Ausführungsform ist die Schnittstellenschaltung SS ein autonomes Gerät, welches mit einem eigenen Mikroprozessor MP, eigenem EPROM-Speicher SP und ggf. eigener Festplatte (nicht dargestellt) sowie mit den entsprechenden Schnittstellen COM (Component Object Model: windowsbasierende Technik, welche Standardschnittstellen bereitstellt und die Kommunikation zwischen Softwarekomponenten ermöglicht), USB (Universal Serial Bus: serielle Schnittstelle), wobei bis zu 127 periphere Geräte (Maus, Tastatur, Drucker, Scanner, digitale Kameras, Modems, CDROM/DVD-Laufwerke, Telefone, MP3-Player u.ä.; USB 2.0 erlaubt Datentransferraten bis 480Mbps und ist damit auch zur Übertragung von Videodaten und für schnelle Festplatten geeignet) ausgestattet ist.

Dieses Gerät SS kommuniziert zum einen über eine standardisierte Schnittstelle COM, USB mit einem Mikrocomputer am Arbeitsplatz AP der an der e-Learning-, bzw. Tele-Teaching-Veranstaltung teilnehmenden Person (USB, COM1 o. ä.), zum anderen mit der dieser Person zur Verfügung stehenden Telekommunikationseinrichtung TE.

Dabei wird durch dieses Gerät SS zunächst die zur Verfügung stehende Bandbreite an der Telekommunikationseinrichtung TE getestet.

In der Speichereinheit SP des Gerätes SS ist die Wählprozedur hinterlegt, mit der sich dieses Gerät SS am zentralen Content-Server der Tele-Teaching-Veranstaltung unter Benutzung eines Telekommunikationsnetzes mit an eine Vermittlungsstelle VST angeschlossenem Hauptverteiler, wobei an den Hauptverteiler ein Zugangsmultiplexer und/oder ein Splitter angeschlossen oder im Hauptverteiler integriert sind, anmeldet.

Mit Verbindungsaufbau wird zunächst die Art der an der Kommunikationsschnittstelle anstehenden Verbindung (analog oder digital), sodann durch nacheinander übermittelte Testinformationen (die ebenfalls in der Speichereinheit SP dieses Gerätes SS abgelegt sind) die zur Verfügung stehende Bandbreite ermittelt. Die Telekommunikationseinrichtung (TE) kann einerseits über eine Teilnehmeranschlussschaltung oder einem Teilnehmermodem und Splitter oder einem Netzabschluss (NTBA) und die Teilnehmeranschlussleitungen (AL) mit dem Hauptverteiler in Verbindung stehen.

Eine besonders vorteilhafte Ausführungsform ist es, dass in der Speichereinheit SP des Gerätes SS die gängigen, auf dem IP-Protokoll aufsetzenden Übertragungsprotokolle hinterlegt sind.

Das Gerät SS testet eigenständig die ihm zur Verfügung stehenden Protokolle in der Kommunikation mit dem Content-Server für die Tele-Teaching-Veranstaltung durch und stellt sich auf das von dort angebotene Protokoll ein.

Eine weitere wichtige Funktionalität des Gerätes SS besteht darin, dass dieses zur Vermeidung von typischen "time out- Problemen" sich in der Weise meldet und den vollständigen Empfang z. B. eines Bildinhaltes bestätigt, dass der Arbeitsplatz AP in der Tele-Teaching-, bzw. e-Learning-Veranstaltung verbleibt, auch wenn z. B. die Übertragung hochauflösender Bilder mit einer Framerate von 16 1/sek. bei einem 56 KBit Anschluss nicht möglich ist.

Für die sendende Stelle ist durch diese Einrichtung der Teilnehmer nach wie vor vorhanden, beim Teilnehmer selbst werden allerdings nur der Audioanteil der Information und ggf. ein Teil der Bildinformation ankommen und dargestellt werden können.

Für viele Veranstaltungen stellt dies indes keinen Nachteil dar, weil es z. B. möglich ist, vorangehend Informationen auf die Arbeitsplätze AP zu übertragen, mit denen dann an diesen eigenständig gearbeitet werden kann (so auch z. B. die Videoinformation zur Verfügung zu haben) und lediglich die "live-Kommunikation" im Rahmen der e-Learning- und Tele-Teaching-Veranstaltung durchzuführen.

Da von den e-Learning- und Tele-Teaching-Veranstaltern beabsichtigt ist, das Gerät SS für die Dauer der Veranstaltungen, bzw. für die Dauer eines gebuchten und bezahlten Kurses den Teilnehmern leihweise zur Verfügung zu stellen, ist es auch wichtig, dass das Gerät SS zusätzlich mit einer in seinem Speichermedium SP abgelegten elektronischen Signatur (Zugangsberechtigung) versehen ist. Nur Geräte SS, die für diese Veranstaltung zugelassen sind, können in der beschriebenen Weise die Verbindung autonom aufbauen.

Entsprechend sind die betreffenden Speichereinheiten SP (i. d. R. EPROMs) austauschbar vorzusehen.

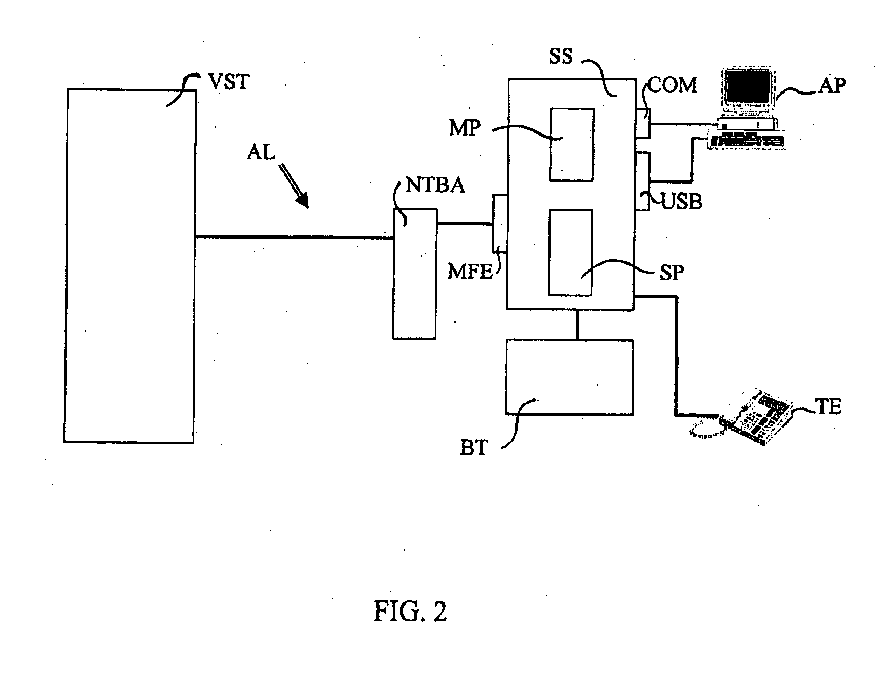

Eine weitere Ausführungsform kann darin bestehen, dass gemäß FIG. 2, das Gerät SS in der beschriebenen Weise zwischen dem Mikrocomputer am Arbeitsplatz AP des Teilnehmers und der Telekommunikationseinrichtung TE sich befindet, aber auch zwischen dem Netzadapter des Teilnehmer-Mikrocomputers und einem lokal vorhandenen PC-Netz. Dies macht insbesondere dort Sinn, wo im Rahmen einer lokalen Veranstaltung (z. B. innerhalb einer innerbetrieblichen Ausbildung) von einer zentralen Stelle aus auch die vollkommene Fernsteuerung des Teilnehmerrechners erfolgen soll, einschließlich der Übernahme von Tastatur, von Maus, sowie eine entsprechende Bildschirmübertragung vom Dozenten zum Teilnehmer, an diesen zurück und an andere Teilnehmer innerhalb eines LANs stattfinden soll. Zu diesem Zwecke ist das Gerät SS mit den entsprechenden Schnittstellen (für Tastatur, Maus, Netzadapter und Grafikadapter, Video-/Grafikadapter) auszustatten.

Eine weitere bevorzugte Ausführungsform besteht darin, dass das Gerät SS gemäß FIG. 1 oder gemäß FIG. 2 zusätzlich mit einem intelligenten Bedienteil BT für den Sprachunterricht versehen wird. Dieses Bedienteil BT hat die Aufgabe, z. B. Sprachdateien, die auf dem Teilnehmer-Mikrocomputer hinterlegt sind, oder die im Rahmen einer e-Learning- oder Tele-Teaching-Veranstaltung als Stream übertragen werden, als sogenannte "Lehrerspur" aufzufassen (diese kann durch den Teilnehmer nicht verändert werden) und hat weiterhin die Aufgabe, eigene Übungen des Teilnehmers, indem er z. B. einen Mustertext nachspricht, auf der "Schülerspur" aufzuzeichnen. Die Aufzeichnung erfolgt in beiden Fällen auf den Speichermedien des Teilnehmer-Mikrocomputers selbst, die Wiedergabe über die entsprechende Soundkarten-Ausstattung. An diesem Sprachlabor-Bedienteil BT ist dann die entsprechende Hör-Sprechgarnitur (Mikrofon, -Kopfhörer, -Kommunikation) angeschlossen, während diese in Ausführungsformen nach FIG. 1 und FIG. 2 direkt am Gerät SS angeschlossen ist.

Eine weitere Ausgestaltung stellt der Anschluss einer sogenannten Web-Cam am Arbeitsplatz AP dar, mit der sich der Teilnehmer bei seinen Diskussionsbeiträgen selbst, oder aber auch einen durch ihn vorbereiteten Versuchsaufbau gegenüber anderen Teilnehmern oder gegenüber einem Auditorium darstellen kann, wenn es zu einer Kombination von Präsenzphase- und e-Learning- und Tele-Teaching-Teilnehmern kommt.

Eine weitere Ausführungsform kann darin liegen, dass die im Gerät SS hinterlegte Signatur ermöglicht, sogenannte Inhalte, die vom e-Learning- und Tele-Teaching-Veranstalter auf seinem Content-Server hinterlegt sind, dauerhaft auf den Teilnehmer-Rechner zu übertragen (File- oder Streamtransfer zur Aufzeichnung auf dem Teilnehmer-Rechner) und nicht nur temporär im Rahmen der Veranstaltung zur Verfügung zu stellen, das heißt, nur über die entsprechende Schnittstelle des Geräts SS zu visualisieren und hörbar zu machen, ohne dass eine Übertragung in den Mikrocomputer des Teilnehmers hinein erfolgt.

Gemäß einer weiteren Ausgestaltung der Erfindung ist die Schnittstellenschaltung SS als Einsteckkarte einer Netzwerkstation (Teilnehmereinrichtung TE) oder eines PC (Arbeitplatz AP) ausgestaltet. Die Einsteckkarte weist wiederum mindestens einen Mikroprozessor MP und eine als Bus-Interface ausgestaltet LAN-Schnittstelle auf, wobei die LAN-Schnittstelle über den PCI-Bus, welcher die Protokoll-Kontroll-Information überträgt, mit der Netzwerkstation oder dem PC als Wirtssystem in Verbindung steht. Beim Einstecken der Einsteckkarte in das Wirtssystem, wird diese über die Plug- and Play-Funktionalität bzw. über Standard-Treiber als LAN-Karte erkannt. Dadurch erfolgt automatisch eine "Anmeldung im Netzwerk" bzw. Inbetriebnahme und auch beim Austausch der erfindungsgemäßen Schnittstellenschaltung SS ist eine "Neuprogrammierung" nicht erforderlich. Beispielsweise besteht mit einem Softwaremodul ICL (Intelligent Connection Layer) die Möglichkeit, verschiedene öffentliche Netzverbindungen (ISDN, X.25, Standleitungen, Wählverbindungen, wie FE-Wahl, C- und D-Netze) nach Bedarf zu schalten. Durch diese Modultechnik lassen sich zukünftige Entwicklungen in der Netzwerktechnologie, z.B. GSM, nahtlos einfügen.

Weiterhin ist durch die Nutzung der Komponenten USV, Netzteil, Festplatte (Alternative Flash-ROM), Lüfter und Gehäuse des Wirtssystems eine Kosteneinsparung bzw. Funktionserweiterung möglich. Die Einsteckkarte benutzt den PCI-Bus nur als Stromversorgung und LAN-Schnittstelle. Fällt das Wirtssystem aus, ist die erfindungsgemäße Schnittstellenschaltung SS noch weiter betriebsbereit, da diese weiterhin die Daten über das LAN bezieht und auch nach einem Ausfall noch Strom aus dem PCI-Bus bezogen werden kann. Diese Anschluss-Technik ermöglicht in vorteilhafter Weise den Einsatz der erfindungsgemäßen Schnittstellenschaltung SS in jedem System mit PCI-Bus (Sun Ultra, Unix-System) und erhöht zudem die Betriebssicherheit des Netzwerkes.

Vorzugsweise weist die Einsteckkarte einen Rufnummern-Speicher mit zum Daten-Zugriff berechtigter Teilnehmer und/oder Netzwerkstationen auf und nach Maßgabe der übertragenen Rufnummer erfolgen der Rufnummernvergleich und/oder der Verbindungsaufbau zum berechtigten Anrufer. Den Einbruch seitens öffentlicher Netze kann beispielsweise mittels ISDN-Rufnummernvergleich verhindert werden. Die im D-Kanal fälschungssicher übergebene Rufnummer wird mit einer Tabelle berechtigter Anwender verglichen. Bei aktivierter Call Back Funktion baut die Schnittstellenschaltung SS die Verbindung zum autorisierten Anrufer auf. Weitere Sicherheitsmechanismen können sein: IP-Paketfilter, Call Back, Identification control, PAP (password authentification protocoll), CHAP (challenge authentification protocoll) und Kryptisierung. Gerade die zuletzt genannte Verschlüsselung ist immer noch das wirksamste Mittel im Datenschutz, um Informationen in falschen Händen unverwertbar zu machen: beispielsweise kann in der Schnittstellenschaltung SS ein Kryptisierungsverfahren nach dem DES-Standard vorgesehen werden.

Wählverbindungen werden nach einem entfernungsabhängigen Zeitraster tarifiert. Um Leerlaufzeiten zu vermeiden, baut bei Übertragungspausen der Datenkommunikation größer als eine einstellbare Wartezeit (Shorthold), die Schnittstellenschaltung SS automatisch die Verbindung ab und stellt, sobald Daten anliegen, den Verbindungsaufbau wieder her. Mit einer optionalen Kompression kann der Datenverkehr reduziert werden.

Schließlich kann die Schnittstellenschaltung SS nach Maßgabe des Bandbreitenbedarfs, automatisch weitere Kommunikationskanäle zuschalten, wodurch eine dynamische Kanalverwaltung und Bandbreitensteuerung erzielt wird. Je nach Bedarf an Bandbreite, d.h. abhängig von der Menge zu transportierender Daten, schaltet die Schnittstellenschaltung SS automatisch weitere Kommunikationskanäle zu. Durch Parallelbetrieb beispielsweise aller 30 B-Kanäle können Übertragungsgeschwindigkeiten bis 1,92 Mbit/s erzielt werden.

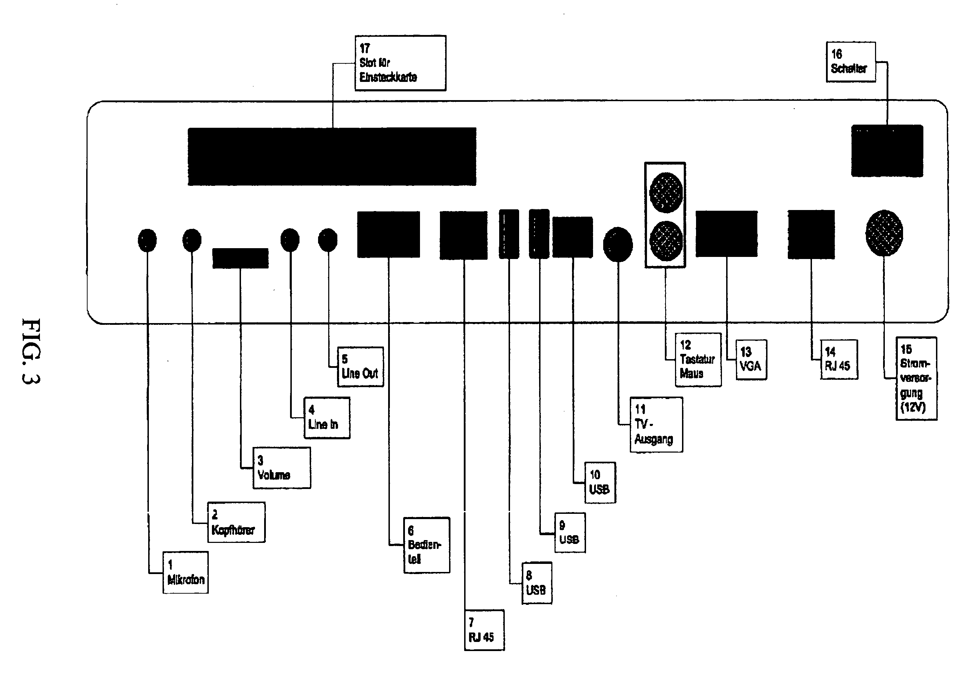

Das Hardware-Konzept der Schnittstellenschaltung SS kann auf die vielfältigen, gewachsenen Anschlussnormen im weltweiten Netzwerkbetrieb angepasst werden. FIG. 3 zeigt eine Ausführungsform der erfindungsgemäßen Schnittstellenschaltung SS von der Anschlussseite her gesehen. Dabei ist mit 1: der Anschluss für ein Mikrofon, mit 2: der Anschluss für einen Kopfhörer (headset), mit 3: der Lautstärkeregler, mit 4: Line in, mit 5: Line out, mit 6: der Anschluss für ein Bedienteil, mit 7: der Anschluss für eine Webcam, mit 8, 9, 10: der jeweilige Anschluss für USB (z.B. LAN/TP), mit 11: der Anschluss für ein Fernsehgerät, mit 12: der Anschluss für eine Tastatur, Maus, mit 13: der Anschluss für einen VGA-Monitor, mit 14: der Anschluss für TAE/ISDN/DSL, mit 15: der Anschluss für ein Steckernetzteil (12 V), mit 16: der Ein- Ausschalter und mit 17: der Schacht für eine Einsteckkarte (PCMCIA) bezeichnet. Speziell angepasste LAN-Module mit wahlweise BNC-, AUI-, LWL- oder Twisted Pair-Anschlüssen verbinden die Schnittstellenschaltung SS mit lokalen Token-Ring- und Ethernet-Netzwerken. Die Zugänge zu den Weitverkehrsnetzen (z.B. ISDN, X.25) und Standleitungen werden mit zum Teil mehrkanaligen WAN-Adaptern (S_{O}, U_{PO}, U_{KO}, X.21, V.24, V.35) geschaffen. Für die optimale Performance können aktive WAN-Adapter eingesetzt werden. Im ISDN-Bereich sind die Protokolle DSS1, 1TR6, NI-1, sowie Fetex 150 verfügbar.

Das erfindungsgemäße Verfahren in Verbindung mit der Schnittstellenschaltung SS (und deren Multimedia-Front-End MFE) ermöglicht einen kostengünstigen Aufbau beliebig vernetzbarer Arbeitsplätze mit individueller interaktiver Kommunikation über beliebige drahtlose oder drahtgebundene Netzwerke bzw. Telekommunikationsnetze (beispielsweise UTRAN UMTS Terrestrial Radio Access Network). Der dabei ablaufende iterative Prozess hinsichtlich Bandbreitentests umfasst alle sinnvoll vorkommende Bitraten, welche entsprechend hinterlegt sind, kann insbesondere auch bei inhomogenen Strukturen eingesetzt werden und erlaubt auch ein Netzmonitoring mit Einschluss des Arbeitsplatzes AP und der Telekommunikationseinrichtungen TE.

Damit wird es erstmalig möglich, die gemeinsame Arbeit in der Schule, in der Universität, oder am Kolleg zuhause fortzusetzen - also "Blended Learning", d.h. die Verknüpfung von Präsenzmit "Selbstlernphasen" durchzuführen und durch "plug and play" auch inhomogene Benutzergruppen hinsichtlich fachlicher Vorbildung, häufig auch hinsichtlich EDV-Kenntnissen und hinsichtlich Geräte- und Kommunikationsausstattung zusammenzuführen bzw. diesen selbst die Einrichtung einer Video-Conference- und eLearning-Umgebung vornehmen zu lassen. Weiterhin ist von Vorteil, dass die erfindungsgemäße Schnittstellenschaltung SS (Syncobox) als eigenständiges Gerät aufgebaubar (mit einem Anschluss für ein Steckernetzteil) und für analoge, ISDN- und DSL-Anschlüsse geeignet ist, dass eLearning und Videoconferencing (Anschlüsse: WebCam, Headset und ggf. Bedienteil) mit dem Fernsehgerät und ohne PC ermöglicht wird, dass Firmen-LANs unverändert bleiben (Sicherheit), dass die Schnittstellenschaltung SS eLeaming-Sessions und Content zuverlässig vor missbräuchlicher Benutzung schützt und dass "Abstürze" wegen Unverträglichkeiten zwischen vorgefundener Rechnerinstallation und hinzugefügter Videokonferenz und eLearning-Software (nicht jedes Problem tritt sofort auf) oder "time-out" während der Session zuverlässig vermieden werden.

In Weiterbildung der Erfindung kann beispielsweise das Betriebssystem des Mikroprozessors MP der Schnittstellenschaltung SS entweder über ein Bootprom oder über die integrierte LAN-Schnittstelle von der Festplatte des Wirtssystems oder über das externe LAN-Interface aus einem beliebigen System im LAN gestartet/ferngeladen werden, so dass die Schnittstellenschaltung SS nach dem Bootvorgang eine eigenständige, vom verwendeten Betriebssystem (beispielsweise WinNT) unabhängige Kommunikationsplattform darstellt; für TCP/IP und SPX/IPX können Routing-Funktionalitäten (auch als LCR: Least Cost Router) in die Schnittstellenschaltung SS installiert/integriert werden usw.

## Patentansprüche

1. Verfahren zum Aufbau eines virtuellen elektronischen Lehrsystems mit einem zentralen Content-Server für eine e-Learning- oder Tele-Teaching-Veranstaltung und mit einem Arbeitsplatz (AP) der an der e-Learning- oder Tele-Teaching-Veranstaltung teilnehmenden Personen unter Benutzung eines Telekommunikationsnetzes mit an eine Vermittlungsstelle (VST) angeschlossenem Hauptverteiler, wobei an den Hauptverteiler ein Zugangsmultiplexer und/oder ein Splitter angeschlossen oder im Hauptverteiler integriert sind, und mit analogen oder digitalen Telekommunikationseinrichtungen (TE), wobei eine an die Telekommunikationseinrichtung (TE) und an den Arbeitsplatz (AP) anschließbare oder in Verbindung stehende Schnittstellenschaltung (SS) vorgesehen ist, und wobei mit jedem Verbindungsaufbau zunächst die maximal zur Verfügung stehende Bandbreite einer anstehenden digitalen Verbindung ermittelt wird, danach eine gespeicherte Testinformationen zur Gegenstelle gesendet wird und danach eine in Rückrichtung vom der Gegenstelle empfangene Quittung ausgewertet wird, wodurch die an der Telekommunikationseinrichtung (TE) zur Verfügung stehende Bandbreite getestet wird, **dadurch gekennzeichnet, dass** zur Vermeidung von "time-out-Problemen" die Schnittstellenschaltung (SS) automatische Tests der an der e-Learning- oder Tele-Teaching-Veranstaltung teilnehmenden Person zur Verfügung stehenden technischen Ausstattung durchführt, indem:
• mit jedem Verbindungsaufbau über eine Teilnehmeranschlussschaltung oder einem Teilnehmermodem und Splitter oder einem Netzabschluss (NTBA), die Teilnehmeranschlussleitung (AL) und dem Hauptverteiler zum Content-Server zunächst ermittelt wird, ob eine analoge oder digitale Verbindung ansteht,
• danach eine gespeicherte Testinformationen zum Content-Server gesendet wird,
• eine in Rückrichtung vom Content-Server empfangene Quittung ausgewertet wird und
• indem sich die Schnittstellenschaltung (SS) derart meldet und den vollständigen Empfang eines Bildinhaltes bestätigt, dass der Arbeitsplatz (AP) in der Tele-Teaching- oder e-Learning-Veranstaltung verbleibt, auch wenn eine breitbandige Übertragung nicht möglich ist.

2. Verfahren nach Anspruch 1, **dadurch gekennzeichnet, dass** die Schnittstellenschaltung (SS) die ihr zur Verfügung stehenden Protokolle in Kommunikation mit dem Content-Server als Gegenstelle durchtestet und sich auf das von dort angebotene Protokoll einstellt.

3. Verfahren nach Anspruch 1, **dadurch gekennzeichnet, dass** die Schnittstellenschaltung (SS) nach Maßgabe des Bandbreitenbedarfs, automatisch weitere Kommunikationskanäle zuschaltet, wodurch eine dynamische Kanalverwaltung und Bandbreitensteuerung erzielt wird.

4. Verfahren nach Anspruch 1, **dadurch gekennzeichnet, dass** in der Schnittstellenschaltung (SS) eine Zugangsberechtigung abgespeichert ist, wodurch die Steuerung von Verbindungsaufbau und Prüfprozesses gegen unbefugten Zugriff gesichert ist und dass der Ablauf protokolliert wird.

5. Virtuelles elektronischen Lehrsystem mit einem zentralen Content-Server für eine e-Learning- oder Tele-Teaching-Veranstaltung, mit Arbeitsplätzen (AP) der an der e-Learning- oder Tele-Teaching-Veranstaltung teilnehmenden Personen, mit einem Telekommunikationsnetz, welches einen an eine Vermittlungsstelle (VST) angeschlossenem Hauptverteiler, mit an den Hauptverteiler angeschlossenen oder integrierten Zugangsmultiplexer und/oder ein Splitter, und analoge oder digitale Telekommunikationseinrichtungen (TE) aufweist, und mit einer an die Telekommunikationseinrichtung (TE) anschließbaren Schnittstellenschaltung (SS), **dadurch gekennzeichnet, dass** zur Vermeidung von "time-out-Problemen" die Schnittstellenschaltung (SS) zum automatischen Testen der an der e-Learning- oder Tele-Teaching-Veranstaltung teilnehmenden Person zur Verfügung stehenden technischen Ausstattung mit jedem Verbindungsaufbau einerseits über eine Teilnehmeranschlussschaltung oder einem Teilnehmermodem und Splitter oder einem Netzabschluss (NTBA), die Teilnehmeranschlussleitungen (AL) und dem Hauptverteiler mit dem Content-Server und andererseits über mindestens eine standardisierte Schnittstelle mit dem Arbeitsplatz (AP) in Verbindung steht und ermittelt, ob eine analoge oder digitale Verbindung ansteht, eine zum Content-Server gespeicherte Testinformation sendet und eine in Rückrichtung vom Content-Server empfangene Quittung auswertet und dass sich die Schnittstellenschaltung (SS) derart meldet und den vollständigen Empfang eines Bildinhaltes bestätigt, dass der Arbeitsplatz (AP) in der Tele-Teaching- oder e-Learning-Veranstaltung verbleibt, auch wenn eine breitbandige Übertragung nicht möglich ist.

6. Lehrsystem nach Anspruch 5, **dadurch gekennzeichnet, dass** die Schnittstellenschaltung (SS) einen Mikroprozessor (MP), einen Festwertspeicher (SP) und / oder eine Festplatte sowie mindestens jeweils eine Steckverbindung (COM, USB) für den Anschluss der Telekommunikationseinrichtung (TE) und des Arbeitsplatzes (AP) aufweist.

7. Lehrsystem nach Anspruch 6, **dadurch gekennzeichnet, dass** der Festwertspeicher (SP) austauschbar ist.

8. Lehrsystem nach Anspruch 5, **dadurch gekennzeichnet, dass** an die Schnittstellenschaltung (SS) ein intelligentes Bedienteil (BT) angeschlossen ist.

9. Lehrsystem nach Anspruch 5, **dadurch gekennzeichnet, dass** die Schnittstellenschaltung (SS) als Einsteckkarte einer Netzwerkstation oder eines PC ausgestaltet ist.

10. Lehrsystem nach Anspruch 9, **dadurch gekennzeichnet, dass** die Einsteckkarte mindestens einen Mikroprozessor (MP) und eine als Bus-Interface ausgestaltet LAN-Schnittstelle aufweist und dass die LAN-Schnittstelle über den PCI-Bus, welcher die Protokoll-Kontroll-Information überträgt, mit der Netzwerkstation oder dem PC als Wirtssystem in Verbindung steht.

11. Lehrsystem nach Anspruch 9, **dadurch gekennzeichnet, dass** beim Einstecken der Einsteckkarte in das Wirtssystem, diese über die Plug- and Play-Funktionalität bzw. über Standard-Treiber als LAN-Karte erkannt wird.

12. Lehrsystem nach Anspruch 9, **dadurch gekennzeichnet, dass** die Einsteckkarte einen Rufnummern-Speicher mit zum Daten-Zugriff berechtigter Teilnehmer und/oder Netzwerkstationen aufweist und dass nach Maßgabe der übertragenen Rufnummer der Rufnummernvergleich und/oder der Verbindungsaufbau zum berechtigten Anrufer erfolgen.

13. Lehrsystem nach Anspruch 9, **dadurch gekennzeichnet, dass** bei Übertragungspausen der Datenkommunikation größer als eine einstellbare Wartezeit, die Einsteckkarte automatisch die Verbindung abbaut und sobald Daten anliegen den Verbindungsaufbau wieder herstellt.

14. Lehrsystem nach Anspruch 9, **dadurch gekennzeichnet, dass** nach Maßgabe des Bandbreitenbedarfs, die Einsteckkarte automatisch weitere Kommunikationskanäle zuschaltet, wodurch eine dynamische Kanalverwaltung und Bandbreitensteuerung erzielt wird.

15. Virtuelles elektronisches Lehrsystem nach Anspruch 5, **dadurch gekennzeichnet, dass** die Schnittstellenschaltung (SS) von der Anschlussseite her gesehen, einen Anschluss für ein Mikrofon (1), einen Anschluss für einen Kopfhörer (2), einen Anschluss für ein Lautstärkeregler (3), einen Anschluss für "Line in" (4), einen Anschluss für "Line out" (5), einen Anschluss für ein Bedienteil (6), einen Anschluss für eine Webcam (7), drei Anschlüsse für USB (8, 9, 10), einen Anschluss für ein Fernsehgerät (11), einen Anschluss für eine Tastatur oder Maus (12), einen Anschluss für einen VGA-Monitor (13), einen Anschluss für TAE/ISDN/DSL (14), einen Anschluss für ein Steckernetzteil (15), einen Ein-/Ausschalter (16) und einen Schacht für eine Einsteckkarte (17) aufweist.

## Claims

1. Method for the establishment of a virtual electronic teaching system having a central content-server for an e-learning or tele-teaching event and a workstation (AP) of a person participating in the e-learning or tele-teaching event, utilizing a telecommunication network with a main distribution connected to an exchange (VST), with an access multiplexer and/or splitter connected to or integrated in the main distribution, and with analog or digital telecommunication devices (TE), whereas an interface circuit (SS) is connected or connectable to the telecommunication device (TE) and the workstation (AP) and whereas during each call setup first the maximum bandwidth of an upcoming digital connection is determined, then a stored test signal is transmitted from the interface circuit to a remote station and then an acknowledgement returned in the return direction by the remote station is evaluated whereby the bandwidth available at the telecommunication device (TE) is tested, **characterized in that** for preventing "time out"-problems the interface circuit (SS) automatically carried out a test of the technical equipment available to the person participating in the e-learning or tele-teaching event, whereby:
• first with each call setup via a subscriber line or subscriber modem and splitter or a network termination (NTBA), an subscriber line (AL) and the main distribution to the content-server is evaluated if an analog or a digital connection is present,
• then a stored test information is transmitted to the content-server,
• then an acknowledgement returned in the return direction by the content-server is evaluated and
• whereby the interface circuit (SS) answers und acknowledges the complete reception of an image file in such a way that said workstation (AP) remains connected to said e-learning or tele-teaching event including during periods when broadband transmission is not possible.

2. Method according to claim 1, **characterized in that** the interface circuit (SS) tests all available protocols in communication with the content-server as remote station and adjust itself to the protocol proposed.

3. The method of claim 1, wherein said interface circuit (SS) depending on the bandwidth demand automatically activates additional communication channels by means of which a dynamic channel management and bandwidth control is achieved.

4. Method according to claim 1, **characterized in that** an access authorization is stored in the interface circuit (SS), thereby securing the establishment of the connection and the test process against unauthorized access and by recording the procedure.

5. A virtual electronic teaching system, having a central content-server for an e-learning or tele-teaching event, a workstation (AP) of a person participating in the e-learning or tele-teaching event, a telecommunication network comprising a main distribution connected to an exchange (VST), with an access multiplexer and/or splitter connected to or integrated in the main distribution, and an analog or digital telecommunication device (TE), whereas an interface circuit (SS) is connectable to the telecommunication device (TE), **characterized in that** for preventing "time out"-problems the interface circuit (SS), a first end of said interface circuit (SS) is connected to the main distribution via a subscriber circuit or a subscriber modem and a splitter or a network termination (NTBA), an subscriber line (AL) and the main distribution to the content-server and a second end of said interface circuit (SS) is connected to said workstation (AP), automatically carried out a test of the technical equipment available to the person participating in the e-learning or tele-teaching event in such a way that with each call setup is evaluated if an analog or a digital connection is present, transmits a stored test information to the content-server, evaluates an acknowledgement returned in the return direction by the content-server and whereby the interface circuit (SS) answers und acknowledges the complete reception of an image file in such a way that said workstation (AP) remains connected to said e-learning or tele-teaching event including during periods when broadband transmission is not possible.

6. Electronic teaching system according to Claim 5, **characterized in that** the interface circuit (SS) comprises a microprocessor (MP), a read-only memory (SP) and/or a hard disk, as well as at least one of each plug-type connectors (COM, USB) for the connection to the telecommunication device (TE) and the workstation (AP).

7. Electronic teaching system according to Claim 6, **characterized in that** the read-only memory (SP) is exchangeable.

8. Electronic teaching system according to Claim 5, **characterized in that** an intelligent operating element (BT) is connected to the interface circuit (SS).

9. Electronic teaching system according to Claim 5, **characterized in that** die interface circuit (SS) is designed as a plug-in card for a network station or a PC.

10. Electronic teaching system according to Claim 9, **characterized in that** die plug-in card comprises at least one microprocessor (MP) and a LAN interface designed as bus interface and that the LAN interface is connected via the PCI-bus to the network station or the PC as host system and the PCI-bus transmits protocol-control-information.

11. Electronic teaching system according to Claim 9, **characterized in that** said plug-in card is detected as a LAN card by a plug and play function or by standard drivers when said plug in card is plugged into said host system.

12. Electronic teaching system according to Claim 9, **characterized in that** the plug-in card comprises a call number memory with a number of participants and/or network stations authorized to access data and that, depending on a transmitted call number, the call number is verified and /or the connection is established to the authorized caller.

13. Electronic teaching system according to Claim 9, **characterized in that** the plug-in card automatically breaks a connection in case of a pause in the transmission lasting longer than a preselected waiting time, and restores the connection when data are once again pending.

14. Electronic teaching system according to Claim 9, **characterized in that**, depending on the bandwidth demand, the plug-in card automatically activates additional communication channels to achieve dynamic channel management and bandwidth control.

15. Electronic teaching system according to Claim 5, **characterized in that** the interface circuit (SS) viewed from the connection side comprises a connector for a microphone (1), a connector for a headset (2), a connector for a volume control (3), a connector for "Line in" (4), a connector for "Line out" (5), a connector for an operating element (6), a connector for a webcam (7), three connectors for USB (8, 9, 10), a connector for a TV set (11), a connector for a keyboard or a mouse (12), a connector for a VGA-monitor (13), a connector for a TAE/ISDN/DSL (14), a connector for a Plug-in power unit (15), a connector for an On/Off switch (15) and a card slot for a plug-in card (17).

## Revendications

1. Procédé pour la construction d'un système d'entraînement électronique virtuel avec un content-serveur centrale pour un cours d'e-learning ou pour l'enseignement à distance et avec un lieu de travail (AP) de la personne participant au cours d'e-learning ou au cours l'enseignement à distance, avec l'aide d'un réseau de télécommunication comprenant un répartiteur principal relié à un centre de commutation (VST), dans lequel un multiplexeur d'accès et/ou une puce sont connecté au répartiteur principal ou sont intégré dans le répartiteur principal, et avec des équipements de télécommunications numérique (TE) analogue ou numérique, dans lequel un circuit d'interface (SS) connectable ou communiquant au dispositif de télécommunication (TE) et au lieu de travail (AP) est prévu et dans lequel avec chaque connexion est établie la bande passante disponible d'une connexion numérique est déterminée, ensuite d'une information de test stocké est envoyé vers la station distante et ensuite la réception de la station distante dans le sens inverse est évaluée, ce qui constitue équipements de télécommunications numérique (TE) pour la bande passante disponible est testée, **caractérisé en ce que** pour éviter de "temps des problèmes", le circuit d'interface (SS) effectuant un test automatique d'équipement technique de la personne participant au cours d'e-learning ou au cours l'enseignement à distance, tout d'abord
• à chaque connexion via d'un circuit d'interface de ligne d'abonné ou via d'un modem d'abonné et séparateur ou via d'une terminaison de réseau (NT), les lignes d'abonnés (AL) et la distribution principale et d'autre part au content-serveur, d'abord est déterminée si une communication analogique ou numérique est donné,
• ensuite d'une information de test stocké est envoyé vers le content-serveur,
• la réception du content-serveur dans le sens inverse est évaluée et
• le circuit d'interface (SS) s'annonce de manière et confirmé la réception complète, par exemple, un contenu de l'image, a que le lieu de travail (AP) dans l'enseignement à distance ou dans l'événement e-learning reste, même si une transmission à large bande n'est pas possible.

2. Procédé selon la revendication 1, **caractérisé en ce que** le circuit d'interface (SS) en communication avec content-serveur comme la station distante celui testée les protocoles qu'elles soient mises à la disposition et réglé pour le protocole proposée ici.

3. Procédé selon la revendication 1, **caractérisé en ce que** en fonction des exigences de largeur de bande le circuit d'interface (SS) commutée automatiquement de plusieurs canaux de communication, de manière d'une gestion dynamique des canaux et de contrôle de largeur de bande est atteinte.

4. Procédé selon la revendication 1, **caractérisé en ce que** dans le circuit d'interface (SS), une autorisation d'accès est mémorisé, de manière à commander la connexion et le processus de test est protégée contre un accès non autorisé et que le processus est enregistré.

5. Virtual système d'enseignement électronique avec un content-serveur centrale pour un cours d'e-learning ou pour l'enseignement à distance, avec un lieu de travail (AP) de la personne participant au cours d'e-learning ou au cours l'enseignement à distance, avec l'aide d'un réseau de télécommunication comprenant un répartiteur principal relié à un centre de commutation (VST), dans lequel un multiplexeur d'accès et/ou une puce sont connecté au répartiteur principal ou sont intégré dans le répartiteur principal, et avec des équipements de télécommunications numérique (TE) analogue ou numérique, dans lequel un circuit d'interface (SS) connectable ou communiquant au dispositif de télécommunication (TE), **caractérisé en ce que** pour éviter de "temps des problèmes", le circuit d'interface (SS) effectuant un test automatique d'équipement technique de la personne participant au cours d'e-learning ou au cours l'enseignement à distance et à chaque connexion d'une part via d'un circuit d'interface de ligne d'abonné ou via d'un modem d'abonné et séparateur ou via d'une terminaison de réseau (NT), les lignes d'abonnés (AL) et la distribution principale au content-serveur et d'autre part via au moins d'interfaces standardisées communiqué avec lieu de travail (AP) et déterminée si une communication analogique ou numérique est donné, envoyé d'une information de test stocké vers le content-serveur, et évaluée la réception du content-serveur dans le sens inverse et **en ce que** le circuit d'interface (SS) s'annonce de manière et confirmé la réception complète, par exemple, un contenu de l'image, a que le lieu de travail (AP) dans l'enseignement à distance ou dans l'événement e-learning reste, même si une transmission à large bande n'est pas possible.

6. Système d'enseignement selon la revendication 5, **caractérisé en ce que** le circuit d'interface (SS) comprenant un microprocesseur (MP), une mémoire morte (SP) et/ou un disque dur et au moins un connecteur (COM, USB) pour le raccordement d'équipements de télécommunication (TE) et le lieu de travail (AP).

7. Système d'enseignement selon la revendication 6, **caractérisé en ce que** la mémoire morte (SP) est échangeable.

8. Système d'enseignement selon la revendication 5, **caractérisé en ce que** raccordé au circuit d'interface (SS) est une unité de commande intelligente (BT).

9. Système d'enseignement selon la revendication 5, **caractérisé en ce que** le circuit d'interface (SS) est conçu comme une carte plug-in d'une station de réseau ou un ordinateur.

10. Système d'enseignement selon la revendication 9, **caractérisé en ce que** la carte plug-in comprenant au moins un microprocesseur (MP) et conçu comme une interface de réseau local d'interface de bus et **en ce que** l'interface de réseau local via le bus PCI, qui transmet les informations de commande de protocole, étais en communication avec la station de réseau ou le PC comme une système hôte.

11. Système d'enseignement selon la revendication 9, **caractérisé en ce que** lors de l'insertion de la carte plug-in dans la système hôte, ce qui est détecté par la fonction plug-and-play ou par l'intermédiaire de pilotes standard comme carte de réseau local.

12. Système d'enseignement selon la revendication 9, **caractérisé en ce que** la carte plug-in comprenant une mémoire de numéros d'appel pour accéder aux données à partir des utilisateurs autorisés et/ou des stations du réseau et **en ce que** en conformité avec le numéro transmis la comparaison des numéros et/ou la connexion à l'appelant légitime est faite.

13. Système d'enseignement selon la revendication 9, **caractérisé en ce que** pendant la pause de transmission de la communication de données est supérieur à un temps de retard prédéfini, la carte plug-in efface automatiquement la connexion et lorsque des données sont présentes la connexion se rétablit.

14. Système d'enseignement selon la revendication 9, **caractérisé en ce qu'**en fonction des exigences de largeur de bande, la carte plug-in commutée de plusieurs canaux de communication automatiquement, de manière d'une gestion dynamique des canaux et de contrôle de largeur de bande est atteinte.

15. Système d'enseignement selon la revendication 5 vu du coté de l'orifice le circuit d'interface (SS) comprenant un connecteur pour d'un microphone (1), un connecteur pour écouteurs (2), un connecteur pour un curseur de volume (3), un connecteur pour « Line in » (3), un connecteur pour « Line out » (5), un connecteur pour un panneau de contrôle (6), un connecteur pour une webcam (7), trois connecteurs pour USB (8, 9, 10), un connecteur pour une télévision (11), un connecteur pour un clavier et une souris (12), un connecteur pour une moniteur VGA (13), un connecteur pour TAE / RNIS / DSL (14), un connecteur pour un bloc secteur (15), un connecteur pour un interrupteur marche-arrêt (16) et un l'emplacement pour une carte plug-in (17).
